# EUROPEAN PATENT APPLICATION

(11) **EP 4 813 691 A1**
(43) Date of publication of application: **30.09.2026**
(21) Application number: 26155700.3
(22) Date of filing: 02.02.2026
(51) Int. Cl.: B60K 1/04

(54) **STORAGE BATTERY UNIT MOUNTING STRUCTURE FOR VEHICLE**

(30) Priority: 26.03.2025 JP 2025052477
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP); FUJIWARA, Nobuyoshi, Toyota-shi, Aichi-ken, 471-8571 (JP); KUMAZAWA, Kazuya, Toyota-shi, Aichi-ken, 471-8571 (JP); KIMURA, Kenta, Toyota-shi, Aichi-ken, 471-8571 (JP)
(74) Representative: TBK

(57) **Abstract**

A storage battery unit mounting structure S for a vehicle includes rear equipment 12 and a storage battery unit 14. The rear equipment 12 is mounted at the rear of a vehicle 10. The storage battery unit 14 is mounted at a lower side relative to the rear equipment 12. In the vehicle front-rear direction, a front end 36F of the storage battery unit 14 is at a front side relative to the rear equipment 12 and a rear end 36R is in a mounting range of the rear equipment 12.

## Description

### BACKGROUND

### Technical Field

The present disclosure relates to a storage battery unit mounting structure for a vehicle.

### BACKGROUND ART

### Related Art

Japanese Patent Application Laid-Open (JP-A) No. 2023-109595 discloses a storage battery unit that is mounted at a vehicle and provided with a smoke exhaust channel for exhausting smoke generated inside the storage battery unit.

### SUMMARY

In a vehicle that uses electric power supplied from a storage battery for running, increasing capacity of the storage battery is desired with a view to improving traveling range and the like.

An object of the present disclosure is to enlarge space for mounting a storage battery unit in a vehicle.

A storage battery unit mounting structure for a vehicle according to a first aspect, the storage battery unit mounting structure includes: rear equipment mounted at a rear of the vehicle; and a storage battery unit mounted at a lower side relative to the rear equipment, a front end of the storage battery unit being at a front side relative to the rear equipment in a vehicle front-rear direction, and a rear end of the storage battery unit being in a mounting range of the rear equipment in the vehicle front-rear direction.

In this storage battery unit mounting structure for a vehicle, space at the lower side of the rear equipment may be utilized for mounting the storage battery unit. In the vehicle front-rear direction, the front end of the storage battery unit is at the front side relative to the rear equipment, and the rear end of the storage battery unit is within the range of the rear equipment. Therefore, a large space is secured for mounting the storage battery unit in the vehicle front-rear direction.

In a second aspect, the storage battery unit mounting structure for a vehicle according to the first aspect further includes a smoke release valve at a lower side of the rear equipment, the smoke release valve exhausting smoke produced in the storage battery unit.

In this storage battery unit mounting structure for a vehicle, space at the lower side of the rear equipment may be utilized for disposition of the smoke release valve, and smoke produced in the storage battery unit may be exhausted via the smoke release valve.

In a third aspect, in the storage battery unit mounting structure for a vehicle according to the first aspect or the second aspect, a vehicle seat is provided at an upper side of the rear equipment.

In this storage battery unit mounting structure for a vehicle, the vehicle seat is provided at the upper side of the rear equipment. In other words, space at the lower side of the vehicle seat may be utilized for disposition of the rear equipment and a portion of the storage battery unit. Thus, limited space in the vehicle may be utilized effectively.

According to the present disclosure, space for mounting a storage battery unit in a vehicle may be enlarged.

### BRIEF DESCRIPTION OF THE DRAWINGS

Exemplary embodiments of the present invention will be described in detail based on the following figures, wherein:
Fig. 1 is a side view showing a vehicle.
Fig. 2 is a sectional diagram showing principal portions of a storage battery unit mounting structure according to a present exemplary embodiment.
Fig. 3 is a sectional diagram of the storage battery unit mounting structure according to the present exemplary embodiment, showing a magnification of structures and flows of smoke in the vicinity of a smoke release valve.

### DETAILED DESCRIPTION

Below, a mode for embodying the present disclosure is described in accordance with the drawings. Structural elements that are indicated using the same reference symbols in the drawings signify structural elements that are the same or similar. Duplicative descriptions and reference symbols may be omitted in the exemplary embodiment described below. The drawings that are used for the descriptions below are all schematic drawings. Dimensional relationships between elements, proportions of the elements and the like that are shown in the drawings do not necessarily match reality. Moreover, dimensional relationships between elements, proportions of the elements and the like do not necessarily match between plural drawings.

In the drawings, "FR" indicates a vehicle front, "RR" indicates a vehicle rear, and "UP" indicates a vehicle upper side.

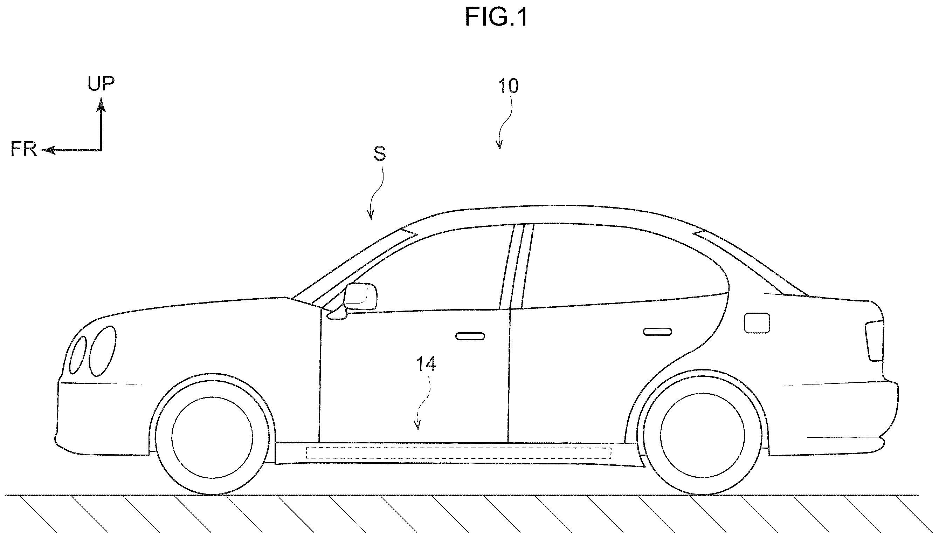

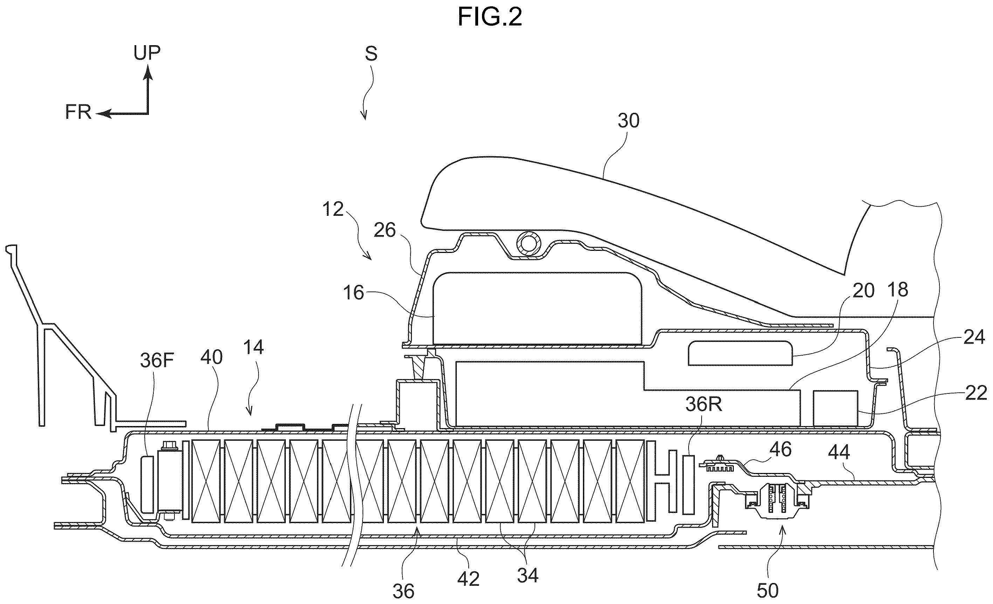

In Fig. 1 and Fig. 2, a storage battery unit mounting structure S for a vehicle according to the present exemplary embodiment includes rear equipment 12 and a storage battery unit 14.

The rear equipment 12 is mounted at the rear of a vehicle 10. A rear seat 30, which serves as an example of a vehicle seat, is provided at the upper side of the rear equipment 12. In other words, the rear equipment 12 is mounted under the rear seat 30. The rear equipment 12 includes, for example, at least one of a unit 16 containing a battery management system (BMS) and an inverter, a junction box 18, an electronic control unit (ECU) 20 or a power distribution unit (PDU) 22. The junction box 18, ECU 20 and PDU 22 are accommodated in, for example, an equipment stand 24. The unit 16 is disposed at the upper side of a front portion of the equipment stand 24, and is covered by a board cover 26.

The storage battery unit 14 includes a battery module 36 in which numerous battery cells 34 are arrayed. The storage battery unit 14 is mounted at a floor portion of the vehicle 10. The battery module 36 is disposed, for example, in a cavity between an upper panel 40 and a lower panel 42. The storage battery unit 14 is mounted at a lower side relative to the rear equipment 12. More specifically, in the vehicle front-rear direction, a front end 36F of the battery module 36 of the storage battery unit 14 is disposed at a front side relative to the rear equipment 12, and a rear end 36R of the battery module 36 is disposed in a mounting range of the rear equipment 12. The meaning of the term "mounting range" as used herein is intended to include, for example, a range from a front end to a rear end of the equipment stand 24 and board cover 26 of the rear equipment 12. The mounting range may instead be understood as a mounting range of various pieces of equipment constituting the rear equipment 12 excluding a container (which is, for example, the equipment stand 24 and the board cover 26), such as a range from the front end of the unit 16 to the rear end of the PDU 22 or the like.

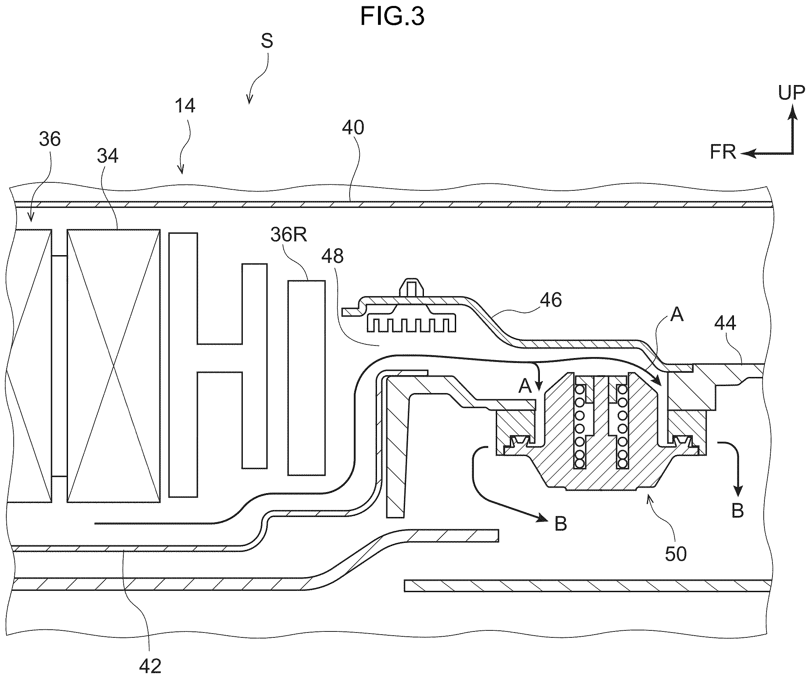

In Fig. 3, a smoke release valve 50 is provided at the lower side of the rear equipment 12. The smoke release valve 50 exhausts smoke that is produced in the storage battery unit 14. As an example, a rear end of the upper panel 40 extends further to the vehicle rear than a rear end of the lower panel 42, and a rear portion panel 44 covers the space between these two rear ends. The smoke release valve 50 is provided at this rear portion panel 44. The smoke release valve 50 is, for example, a one-way valve that is capable of exhausting smoke from the cavity between the upper panel 40 and lower panel 42, in which the battery module 36 is disposed, to below the lower panel 42.

A guide panel 46 that guides smoke produced in the battery module 36 to the smoke release valve 50 is provided above the smoke release valve 50. A rear end of the guide panel 46 is supported by the rear portion panel 44 at the rear side of the smoke release valve 50. A front end of the guide panel 46 is disposed above the rear end of the rear portion panel 44. Thus, a smoke inflow portion 48 is formed.

### - Operation -

The present exemplary embodiment is structured as described above; operations of the present exemplary embodiment are described below. In the storage battery unit mounting structure S for a vehicle according to the present exemplary embodiment in Fig. 2 and Fig. 3, space at the lower side of the rear equipment 12 may be utilized for mounting the storage battery unit 14. In the vehicle front-rear direction, the front end 36F of the battery module 36 of the storage battery unit 14 is at the front side relative to the rear equipment 12 and the rear end 36R of the battery module 36 is in the range of the rear equipment 12. Therefore, a large space is secured for mounting of the storage battery unit 14 in the vehicle front-rear direction. The battery module 36 may be mounted further to the vehicle rear than in a structure in which a battery module is disposed in a region to the front relative to the rear seat 30.

The space at the lower side of the rear equipment 12 may also be utilized for disposition of the smoke release valve 50, and smoke produced by the storage battery unit 14 may be exhausted via the smoke release valve 50. In Fig. 3, smoke produced by the storage battery unit 14 is guided in the directions of arrows A through the inflow portion 48 to the smoke release valve 50. When the smoke release valve 50 opens due to pressure of the smoke, the smoke passes through the smoke release valve 50 and is exhausted outside the storage battery unit 14 in the directions of arrows B.

In the present exemplary embodiment, the rear seat 30 is provided at the upper side of the rear equipment 12. In other words, the space at the lower side of the rear seat 30 is utilized for disposition of the rear equipment 12 and a portion of the storage battery unit 14. Therefore, limited space in the vehicle 10 may be utilized effectively.

Thus, according to the present exemplary embodiment, space for mounting the storage battery unit 14 in the vehicle 10 may be enlarged. That is, an improved storage battery unit mounting structure may be provided.

### - Alternative Embodiments -

An example of an embodiment of the present disclosure is described above, but embodiments of the present disclosure are not limited by the above descriptions. It will be clear that numerous modifications beyond the above descriptions may be embodied within a scope not departing from the gist of the present disclosure.

The smoke release valve 50 is provided at the lower side of the rear equipment 12. However, disposition of the smoke release valve 50 is not limited thus and the smoke release valve 50 may be provided at an alternative location.

The rear seat 30 is provided at the upper side of the rear equipment 12. However, the rear seat 30 need not be provided at the upper side of the rear equipment 12. Moreover, the vehicle seat is not limited to being the rear seat 30 but may be a second row of seats in an arrangement with three rows of seats, a third row of seats, or the like.

## Claims

1. A storage battery unit mounting structure for a vehicle, the storage battery unit mounting structure comprising:
rear equipment mounted at a rear of the vehicle; and
a storage battery unit mounted at a lower side relative to the rear equipment, a front end of the storage battery unit being at a front side relative to the rear equipment in a vehicle front-rear direction, and a rear end of the storage battery unit being in a mounting range of the rear equipment in the vehicle front-rear direction.

2. The storage battery unit mounting structure for a vehicle according to claim 1, further comprising a smoke release valve at a lower side of the rear equipment, the smoke release valve exhausting smoke produced in the storage battery unit.

3. The storage battery unit mounting structure for a vehicle according to claim 2, wherein the smoke release valve is a one-way valve.

4. The storage battery unit mounting structure for a vehicle according to claim 2 or claim 3, further comprising a guide panel that guides smoke produced in the storage battery unit to the smoke release valve.

5. The storage battery unit mounting structure for a vehicle according to any one of claim 2 to claim 4, wherein smoke produced in the storage battery unit is exhausted via the smoke release valve toward a vehicle lower side.

6. The storage battery unit mounting structure for a vehicle according to any one of claim 1 to claim 5, wherein the rear equipment includes at least one of a battery management system, an inverter, a junction box, an electronic control unit or a power distribution unit.

7. The storage battery unit mounting structure for a vehicle according to any one of claim 1 to claim 6, wherein a vehicle seat is provided at an upper side of the rear equipment.
